(19) Europäisches Patentamt
European Patent Office
Office européen des brevets

(11) **EP 3 169 636 B1**

(12) **FASCICULE DE BREVET EUROPEEN**

(45) Date de publication et mention de la délivrance du brevet:
**07.06.2023 Bulletin 2023/23**

(21) Numéro de dépôt: **15736841.6**

(22) Date de dépôt: **15.07.2015**

(51) Classification Internationale des Brevets (IPC):
*C03C 3/087* (2006.01)     *C03C 4/08* (2006.01)
*C03C 4/10* (2006.01)     *C03C 3/095* (2006.01)

(52) Classification Coopérative des Brevets (CPC):
**C03C 3/087; C03C 3/095; C03C 4/10**

(86) Numéro de dépôt international:
**PCT/EP2015/066118**

(87) Numéro de publication internationale:
**WO 2016/008906 (21.01.2016 Gazette 2016/03)**

(54) **FEUILLE DE VERRE À HAUTE TRANSMISSION AUX RAYONNEMENTS INFRAROUGES**

GLASSCHEIBE MIT HOHER DURCHLÄSSIGKEIT FÜR INFRAROTSTRAHLUNG

GLASS SHEET WITH HIGH TRANSMISSION OF INFRARED RADIATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.07.2014 EP 14177487**

(43) Date de publication de la demande:
**24.05.2017 Bulletin 2017/21**

(73) Titulaires:
• **AGC Glass Europe**
**1348 Louvain-La-Neuve (BE)**
• **Asahi Glass Company, Limited**
**Chiyoda-ku**
**Tokyo 100-8405 (JP)**

(72) Inventeurs:
• **LAMBRICHT, Thomas**
**B-1360 Perwez (BE)**

• **DOGIMONT, Audrey**
**B-1495 Sart-Dames-Avelines (BE)**

(74) Mandataire: **AGC Glass Europe**
**Technovation Centre**
**Intellectual Property Department**
**Rue Louis Blériot 12**
**6041 Gosselies (BE)**

(56) Documents cités:
**EP-A1- 0 688 741          WO-A1-2013/072113**
**WO-A1-2013/150053          JP-A- 2007 238 398**
**RU-C1- 2 067 560          US-A- 5 681 782**
**US-A1- 2004 121 896          US-A1- 2004 157 722**
**US-A1- 2006 249 199          US-A1- 2007 015 654**
**US-A1- 2007 024 993          US-A1- 2007 161 492**
**US-A1- 2007 209 698          US-A1- 2013 021 300**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**1. Domaine de l'invention**

La présente invention concerne une feuille de verre présentant une haute transmission aux rayonnements infrarouges. Le domaine général de l'invention est celui des panneaux tactiles optiques, par exemple montés au-dessus de zones de surfaces d'affichage.

Grâce à sa haute transmission aux rayonnements infrarouges (IR), la feuille de verre selon l'invention peut en effet être avantageusement utilisée dans un écran ou panneau ou tablette tactile (« touchscreen » ou « touchpanel » ou « touchpad ») utilisant la technologie optique dite de « Planar Scatter Détection » (PSD) ou encore de « Frustrated total internai reflection » (FTIR) (ou toute autre technologie nécessitant une haute transmission aux IR) pour détecter la position d'un ou plusieurs objets (par exemple, un doigt ou un stylet) sur une surface de ladite feuille.

L'invention a dès lors également trait à un écran, un panneau ou une tablette tactile comprenant une telle feuille de verre.

**2. Solutions de l'art antérieur**

Les technologies PSD et FTIR permettent d'obtenir des écrans/panneaux tactiles à détections multiples qui sont peu onéreux et qui peuvent avoir une surface tactile relativement importante (par exemple, de 3 à 100 pouces) tout en ayant une faible épaisseur.

Ces deux technologies impliquent :

(i) l'injection d'un rayonnement infrarouge (IR), grâce à des diodes électroluminescentes (LED's) par exemple, dans un substrat transparent aux infrarouges à partir d'un ou plusieurs bords/tranches ;

(ii) la propagation du rayonnement infrarouge à l'intérieur dudit substrat (qui joue alors le rôle de guide d'onde), par l'intermédiaire d'un phénomène optique de réflexion totale interne (aucun rayonnement ne « sort » du substrat);

(iii) le contact de la surface du substrat avec un objet quelconque (par exemple, un doigt ou un stylet) entraînant une perturbation locale par diffusion du rayonnement dans toutes les directions ; certains des rayons déviés vont ainsi pouvoir « sortir » du substrat.

Dans la technologie FTIR, les rayons déviés forment un point lumineux infrarouge sur la surface inférieure du substrat, opposée à la surface tactile. Ceux-ci sont vus par une caméra spéciale située en dessous du dispositif.

La technologie PSD implique, quant à elle, deux étapes supplémentaires à la suite des étapes (i)-(iii) :

(iv) l'analyse par un détecteur du rayonnement IR résultant au niveau du bord du substrat; et

(v) le calcul par des algorithmes de la/des position(s) du/des objet(s) en contact avec la surface, à partir du rayonnement détecté. Cette technologie est notamment exposée dans le document US2013021300A1.

A la base, le verre est un matériau de choix pour les panneaux tactiles du fait de ses propriétés mécaniques, de sa durabilité, de sa résistance à la griffe, de sa clarté optique et car il peut être renforcé chimiquement ou thermiquement.

Dans le cas de panneaux de verre utilisés pour la technologie PSD ou FTIR et de surface très importante et donc de longueur/largeur relativement grande, le trajet optique du rayonnement IR injecté est long. Dans ce cas, l'absorption du rayonnement IR par le matériau du verre joue donc significativement sur la sensibilité du panneau tactile qui peut alors diminuer de façon indésirable dans la longueur/largeur du panneau. Dans le cas de panneaux de verre utilisés pour la technologie PSD ou FTIR et de surface plus petite et donc avec un trajet optique du rayonnement IR injecté plus court, l'absorption du rayonnement IR par le matériau du verre joue également, en particulier sur la consommation énergétique du dispositif intégrant le panneau de verre.

Ainsi, une feuille de verre hautement transparente aux rayonnements infrarouges est d'une grand utilité dans ce contexte, afin de garantir une sensibilité intacte ou suffisante sur la totalité de la surface tactile lorsque cette surface est importante. En particulier, une feuille de verre avec un coefficient d'absorption dans la gamme de longueurs d'onde allant de 780 à 1200 nm, utilisées généralement dans ces technologies, égal ou même inférieur à 1 m$^{-1}$ est idéal.

Afin d'obtenir une haute transmission dans les infrarouges (et dans le visible), il est connu de diminuer la teneur totale en fer dans le verre (exprimée en terme de $Fe_2O_3$ selon la pratique standard dans le domaine) en obtenant des verres à basse teneur en fer (ou « low iron »). Les verres de types silicates contiennent toujours du fer car celui-ci est présent comme impureté dans la plupart des matières premières utilisées (sable, calcaire, dolomie...), par exemple WO 2013/150053, US 2007/161492, US 2007/209698, US 2007/243993 ou US 2004/157722. Le fer existe dans la structure du verre sous la forme d'ions ferriques $Fe^{3+}$ et d'ions ferreux $Fe^{2+}$. La présence d'ions ferriques $Fe^{3+}$ confère au verre

une légère absorption de la lumière visible de faible longueur d'onde et une plus forte absorption dans le proche ultraviolet (bande d'absorption centrée sur 380 nm), tandis que la présence d'ions ferreux $Fe^{2+}$ (parfois exprimée en oxyde FeO) provoque une forte absorption dans le proche infrarouge (large bande d'absorption centrée sur 1050 nm). Ainsi, l'augmentation de la teneur en fer totale (sous ses deux formes) accentue l'absorption dans le visible et l'infrarouge. De plus, une forte concentration en ions ferreux $Fe^{2+}$ entraîne une diminution de la transmission dans l'infrarouge (en particulier, le proche infrarouge). Toutefois, pour atteindre un coefficient d'absorption dans la gamme de longueurs d'onde allant de 780 à 1200 nm suffisamment faible pour les applications tactiles uniquement en jouant sur la teneur en fer total, cela nécessiterait une diminution tellement importante de cette teneur en fer total, que (i) soit cela entraînerait des coûts de production beaucoup trop élevés, provenant du besoin de matières premières très pures (qui parfois même n'existent pas suffisamment pures), (ii) soit cela poserait des problèmes de production (notamment l'usure prématurée du four et/ou des difficultés de chauffe du verre dans le four).

Il est également connu, pour augmenter davantage la transmission du verre, d'oxyder le fer présent dans le verre, c'est-à-dire de diminuer la teneur en ions ferreux au profit de la teneur en ions ferriques. Le degré d'oxydation d'un verre est donné par son rédox, défini comme le rapport en poids d'atome de $Fe^{2+}$ par rapport au poids total des atomes de fer présents dans le verre, $Fe^{2+}$/Fe total.

Afin de diminuer le rédox du verre, il est connu d'ajouter au batch de matières premières un composant oxydant. Cependant, la plupart des oxydants connus (sulfates, nitrates, ...) ont un pouvoir oxydant qui n'est pas suffisamment fort pour atteindre les valeurs de transmission IR recherchées pour l'application de panneaux tactiles utilisant la technologie FTIR ou PSD.

### 3. Objectifs de l'invention

L'invention, dans au moins un de ses modes de réalisation, a pour objectif de fournir une feuille de verre avec une haute transmission aux rayonnements infrarouges. En particulier, l'invention a pour objectif de fournir une feuille de verre avec une haute transmission aux rayonnements infrarouges proches.

Un autre objectif de l'invention, dans au moins un de ses modes de réalisation, est de fournir une feuille de verre qui, lorsqu'elle est utilisée comme surface tactile dans des écrans, panneaux ou tablettes tactiles de grandes dimensions, n'entraîne pas ou peu de perte de sensibilité de la fonction tactile.

Un autre objectif de l'invention, dans au moins un de ses modes de réalisation, est de fournir une feuille de verre qui, lorsqu'elle est utilisée comme surface tactile dans des écrans, panneaux ou tablettes tactiles de dimensions plus modestes, est favorable à la consommation énergétique du dispositif.

Un autre objectif de l'invention, dans au moins un de ses modes de réalisation, est de fournir une feuille de verre avec une haute transmission aux rayonnements infrarouges et avec une esthétique acceptable pour l'application choisie.

Finalement, l'invention a également pour objectif de fournir une feuille de verre avec une haute transmission aux rayonnements infrarouges et qui est peu onéreuse à produire.

### 2. Exposé de l'invention

L'invention concerne une feuille de verre ayant une composition qui comprend, en une teneur exprimée en pourcentages en poids total de verre :

| | |
|---|---|
| $SiO_2$ | 55 - 85% |
| $Al_2O_3$ | 0 - 30% |
| $B_2O_3$ | 0 - 20% |
| $Na_2O$ | 0 - 25% |
| CaO | 0 - 20% |
| MgO | 0 - 15% |
| $K_2O$ | 0 - 20% |
| BaO | 0 - 20% |
| Fer total, exprimé sous forme de $Fe_2O_3$, | 0,002 - 0,02% ; |

et une teneur en $Fe^{2+}$, exprimée sous forme de FeO, inférieure à 10 ppm.

Conformément à l'invention, ladite composition :

comprend en outre au moins deux composants parmi le chrome, le sélénium, le cuivre, le cérium, le manganèse et l'antimoine; le chrome, exprimé sous forme de $Cr_2O_3$, étant en une teneur maximale de 0,02% en poids; le sélénium,

exprimé sous forme de Se, étant en une teneur maximale de 0,08% en poids; le cuivre, exprimé sous forme de CuO, étant en une teneur maximale de 0,04% en poids; le cérium, exprimé sous forme de $CeO_2$, étant en une teneur maximale de 0,8% en poids; le manganèse, exprimé sous forme de MnO, étant en une teneur maximale de 1,6% en poids; l'antimoine, exprimé sous forme de $Sb_2O_3$, étant en une teneur maximale de 0,8% en poids. La composition est suivant la formule :

$$A \le [\ 10{,}02*(Cr_2O_3/Fe_2O_3) + 4*(Se/Fe_2O_3) + 2{,}73*(CuO/Fe_2O_3)$$
$$+ 0{,}7*(CeO_2/Fe_2O_3) + 0{,}23*(MnO/Fe_2O_3) + 0{,}11*(Sb_2O_3/Fe_2O_3)\ ]\ ;$$

A étant égal à 0,30 ;
et est suivant la formule :

$$[2*(Cr_2O_3/Fe_2O_3) + 0{,}5*(Se/Fe_2O_3) + 0{,}83*(CuO/Fe_2O_3)$$
$$+ 0{,}05*(CeO_2/Fe_2O_3) + 0{,}025*(MnO/Fe_2O_3) +$$
$$0{,}05*(Sb_2O_3/Fe_2O_3)] \le B;$$

B étant égal à 1.

Ainsi, l'invention repose sur une approche tout à fait nouvelle et inventive car elle permet de résoudre le problème technique posé. Les inventeurs ont en effet mis en évidence qu'il était possible, en combinant dans une composition de verre une basse teneur en fer et un mélange particulier de deux composants ou plus parmi le chrome, le sélénium, le cuivre, le cérium, le manganèse et l'antimoine dans des teneurs spécifiques, d'obtenir une feuille de verre très transparente dans l'IR, avec peu ou pas d'impact sur son esthétique, sa couleur.

D'autres caractéristiques et avantages de l'invention apparaîtront plus clairement à la lecture de la description suivante.

Dans l'ensemble du présent texte, lorsqu'une gamme est indiquée, les extrémités sont inclues. En outre, toutes les valeurs entières et sous-domaines dans une gamme numérique sont expressément inclues comme si explicitement écrites. Dans l'ensemble du présent texte également, les valeurs de teneur en pourcentages sont des valeurs pondérales, exprimées par rapport au poids total du verre. Dans l'ensemble du présent texte également, lorsqu'une teneur en fer total est mentionnée, elle est exprimée sous forme de $Fe_2O_3$. De même, dans une formule, lorsqu'il est fait mention de « $Fe_2O_3$ », il s'agit bien de la teneur en fer total.

La feuille de verre selon l'invention est faite de verre pouvant appartenir à diverses catégories. Le verre peut ainsi être un verre de type silico-sodo-calcique, alumino-silicate, boro-silicate,... De manière préférée et pour des raisons de coûts plus faibles de production, la feuille de verre selon l'invention est une feuille de verre silico-sodo-calcique. Selon ce mode de réalisation préféré, la composition de la feuille de verre peut comprendre, en une teneur exprimée en pourcentages en poids total de verre :

| | |
|---|---|
| $SiO_2$ | 55 - 78% |
| $Al_2O_3$ | 0 - 18% |
| $B_2O_3$ | 0 - 18% |
| $Na_2O$ | 5 - 20% |
| CaO | 0 - 15% |
| MgO | 0 - 10% |
| $K_2O$ | 0 - 10% |
| BaO | 0 - 5% |
| Fer total (exprimé sous forme de $Fe_2O_3$) | 0,002 - 0,02%. |

De manière plus préférée, selon ce mode de réalisation, la composition de la feuille de verre peut comprendre, en une teneur exprimée en pourcentages en poids total de verre :

| | |
|---|---|
| $SiO_2$ | 60 - 75% |
| $Al_2O_3$ | 0 - 6% |
| $B_2O_3$ | 0 - 4% |

(suite)

| | |
|---|---|
| CaO | 0 - 15% |
| MgO | 0 - 10% |
| $Na_2O$ | 5 - 20% |
| $K_2O$ | 0 - 10% |
| BaO | 0 - 5% |
| Fer total (exprimé sous forme de $Fe_2O_3$) | 0,002 - 0,02%. |

Avantageusement et selon un mode de réalisation particulier, la composition de la feuille de verre selon l'invention est exempte de bore (ce qui signifie qu'il n'est pas intentionnellement ajouté, mais peut être présent sous forme d'impuretés indésirables en quantités très faibles).

Avantageusement et selon un autre mode de réalisation particulier, la composition de la feuille de verre selon l'invention est exempte de lithium (ce qui signifie qu'il n'est pas intentionnellement ajouté, mais peut être présent sous forme d'impuretés indésirables en quantités très faibles).

Avantageusement et selon un autre mode de réalisation particulier, la composition de la feuille de verre selon l'invention est exempte de zinc (ce qui signifie qu'il n'est pas intentionnellement ajouté, mais peut être présent sous forme d'impuretés indésirables en quantités très faibles).

Avantageusement et selon un autre mode de réalisation particulier, la composition de la feuille de verre selon l'invention est exempte de strontium (ce qui signifie qu'il n'est pas intentionnellement ajouté, mais peut être présent sous forme d'impuretés indésirables en quantités très faibles).

Avantageusement et selon encore un autre mode de réalisation particulier, la composition de la feuille de verre selon l'invention est exempte de cobalt (ce qui signifie qu'il n'est pas intentionnellement ajouté, mais peut être présent sous forme d'impuretés indésirables en quantités très faibles). De manière préférée, selon ce mode de réalisation, la composition de la feuille de verre selon l'invention comprend une teneur en cobalt inférieure à 0,0005% (exprimé sous forme de Co). De manière plus préférée, la composition de la feuille de verre selon l'invention comprend une teneur en cobalt inférieure à 0,0002% ou encore mieux, inférieure à 0,0001%. De manière encore plus préférée, la composition de la feuille de verre selon l'invention comprend une teneur en cobalt inférieure à 0,00005% ou encore mieux, inférieure à 0,00001%.

Par verre au sens de l'invention, on entend un matériau totalement amorphe, excluant donc tout matériau cristallin, même partiellement (comme par exemple, les matériaux vitro-cristallins ou vitrocéramiques).

La feuille de verre selon l'invention peut être une feuille de verre obtenue par un procédé de flottage, d'étirage, de laminage ou tout autre procédé connu pour fabriquer une feuille de verre au départ d'une composition de verre en fusion. Selon un mode de réalisation préférentiel selon l'invention, la feuille de verre est une feuille de verre flotté. Par feuille de verre flotté, on entend une feuille de verre formée par le procédé de flottage (ou « float »), consistant à déverser le verre en fusion sur un bain d'étain fondu, sous conditions réductrices. Une feuille de verre flotté comporte, de façon connue, une face dite « face étain », c'est-à-dire une face enrichie en étain dans la masse du verre proche de la surface de la feuille. Par enrichissement en étain, on entend une augmentation de la concentration en étain par rapport à la composition du verre à coeur, cette dernière pouvant être substantiellement exempte d'étain ou non.

La feuille de verre selon l'invention peut avoir des dimensions diverses et relativement importantes. Elle peut, par exemple, avoir des dimensions allant jusqu'à 3,21 m × 6 m ou 3,21 m × 5,50 m ou 3,21 m × 5,10 m ou 3,21 m × 4,50 m (feuille de verre appelée « PLF ») ou encore, par exemple, 3,21 m × 2,55 m ou 3,21 m x 2,25 m (feuille de verre appelée « DLF »).

La feuille de verre selon l'invention peut avoir une épaisseur variant entre 0,1 et 25 mm. Avantageusement, dans le cas de l'application de panneaux tactiles, la feuille de verre selon l'invention peut avoir une épaisseur variant entre 0,1 et 6 mm. De manière préférée, dans le cas de l'application d'écrans tactiles, pour des raisons de poids, l'épaisseur de la feuille de verre selon l'invention est de 0,1 à 2,2 mm.

Selon l'invention, la composition de la feuille de verre comprend une teneur en fer total (exprimé en terme de $Fe_2O_3$) allant de 0,002 à 0,02% en poids par rapport au poids total du verre. Une teneur en fer total (exprimé sous forme de $Fe_2O_3$) inférieure ou égale à 0,02% en poids permet d'augmenter davantage la transmission IR de la feuille de verre. La valeur minimale permet de ne pas trop pénaliser le coût du verre car de si faibles valeurs en fer nécessitent souvent des matières premières très pures onéreuses ou bien une purification de celles-ci. De manière préférée, la composition comprend une teneur en fer total (exprimé sous forme de FezOs) allant de 0,002 à inférieur à 0,014% en poids par rapport au poids total du verre.

La composition de la feuille de verre selon l'invention répond à la formule suivante (ci-après nommée « formule A »):

$$[ 10,02*(Cr_2O_3/Fe_2O_3) + 4*(Se/Fe_2O_3) + 2,73*(CuO/Fe_2O_3)$$
$$+ 0,7*(CeO_2/Fe_2O_3) + 0,23*(MnO/Fe_2O_3) + 0,11*(Sb_2O_3/Fe_2O_3) ] \geq A ;$$

où A est égal à 0,30.

Selon un mode de réalisation de l'invention, dans la « formule A » précédente, A est égal à 0,6 et, de préférence, égal à 0,9. De manière plus préférée, dans la « formule A » précédente, A est égal à 1,2 ; voire 1,5 ; 1,8 ; 2,1 ; 2,4 ou encore mieux 2,7. De manière toute préférée, dans la « formule A » précédente, A est égal à 3,0. De telles valeurs croissantes de A permettent d'obtenir un effet bénéfique de plus en plus important sur la transmission dans l'IR de la feuille de verre.

Conformément à l'invention, la composition comprend au moins deux composants parmi le chrome, le sélénium, le cuivre, le cérium, le manganèse et l'antimoine; le chrome (exprimé sous forme de $Cr_2O_3$) étant en une teneur maximale de 0,02% en poids; le sélénium (exprimé sous forme de Se) étant en une teneur maximale de 0,08% en poids; le cuivre (exprimé sous forme de CuO) étant en une teneur maximale de 0,04% en poids; le cérium (exprimé sous forme de CeOz) étant en une teneur maximale de 0,8% en poids; le manganèse (exprimé sous forme de MnO) étant en une teneur maximale de 1,6% en poids; l'antimoine (exprimé sous forme de $Sb_2O_3$) étant en une teneur maximale de 0,8% en poids, étant entendu que chacune des teneurs peut être nulle si le composant parmi le chrome, le sélénium, le cuivre, le cérium, le manganèse et l'antimoine n'est pas présent dans la composition de l'invention.

Le mode de réalisation particulier de l'invention dans lequel la composition comprend du chrome et au moins un composant parmi le sélénium, le cuivre, le cérium, le manganèse et l'antimoine s'est révélée particulièrement bonne en terme d'amélioration de la transmission dans les IR.

Selon un mode de réalisation de l'invention, la composition comprend :

- un rapport $Cr_2O_3/Fe_2O_3 \leq 0,5$ ;
- un rapport $Se/Fe_2O_3 \leq 2$ ;
- un rapport $CuO/Fe_2O_3 \leq 1,2$ ;
- un rapport $CeO_2/Fe_2O_3 \leq 20$ ;
- un rapport $MnO/Fe_2O_3 \leq 40$ ; et
- un rapport $Sb_2O_3/Fe_2O_3 \leq 20$; étant entendu que chacun de ces rapports peut être nul si le composant parmi le chrome, le sélénium, le cuivre, le cérium, le manganèse et l'antimoine n'est pas présent dans la composition de l'invention. Ce mode de réalisation a l'avantage de limiter la présence des composants parmi le chrome, le sélénium, le cuivre, le cérium, le manganèse et l'antimoine, en relatif par rapport au fer, en-deçà de teneurs qui péjoreraient trop significativement certaines propriétés de la feuille de verre finale (par exemple, sa couleur ou même son coût), sans obtenir davantage d'effet positif sur sa transmission dans l'IR.

Selon ce dernier mode de réalisation et de manière avantageuse, la composition comprend :

- un rapport $Cr_2O_3/Fe_2O_3 \leq 0,25$ ;
- un rapport $Se/Fe_2O_3 \leq 1$;
- un rapport $CuO/Fe_2O_3 \leq 0,6$ ;
- un rapport $CeO_2/Fe_2O_3 \leq 10$ ;
- un rapport $MnO/Fe_2O_3 \leq 20$ ; et
- un rapport $Sb_2O_3/Fe_2O_3 \leq 10$;

ce qui a l'avantage d'encore limiter la présence des composants parmi le chrome, le sélénium, le cuivre, le cérium, le manganèse et l'antimoine, en relatif par rapport au fer, en-deçà de teneurs qui péjoreraient toujours relativement significativement certaines propriétés de la feuille de verre finale (par exemple, sa couleur ou même son coût), tout en obtenant un effet très limité sur sa transmission dans l'IR.

Selon le mode de réalisation de l'invention, la composition est suivant la formule (ci-après nommée « formule B »):

$$[ 2*(Cr_2O_3/Fe_2O_3) + 0,5*(Se/Fe_2O_3) + 0,83*(CuO/Fe_2O_3)$$
$$+ 0,05*(CeO_2/Fe_2O_3) + 0,025*(MnO/Fe_2O_3) +$$
$$0,05*(Sb_2O_3/Fe_2O_3) ] \leq B ;$$

B étant égal à 1.

Ce mode de réalisation représente une optimisation des teneurs supérieures des composants chrome, sélénium, cuivre, cérium, manganèse et antimoine, en relatif par rapport au fer, permettant d'obtenir la transmission dans l'IR la plus élevée, tout en limitant l'impact sur d'autres propriétés de la feuille de verre finale (par exemple, sa couleur),

De manière préférée, dans la « formule B », **B** est égal à 0,5 ou encore mieux égal à 0,25. De telles valeurs décroissantes de **B**, dans la « formule B », améliorent encore l'optimisation précitée.

Selon un mode de réalisation, la composition de la feuille de verre conforme à l'invention comprend au moins trois composants parmi le chrome, le sélénium, le cuivre, le cérium, le manganèse et l'antimoine. Avantageusement, la composition de la feuille de verre conforme à l'invention comprend au moins quatre composants parmi le chrome, le sélénium, le cuivre, le cérium, le manganèse et l'antimoine. De tels modes de réalisation ont pour effet de permettre un plus grand degré de liberté quant à certaines propriétés du verre final autres que le coefficient d'absorption et/ou certaines contraintes de productibilité du verre. Par exemple, cela peut permettre de jouer plus finement sur l'impact de chacun des composants en terme de couleur et/ou de transmission lumineuse du verre final.

Selon un autre mode de réalisation de l'invention, la composition de la feuille de verre selon l'invention comprend au moins deux composants parmi le chrome, le sélénium, le cuivre, le cérium, le manganèse et l'antimoine, à l'exception de toute association du cérium et de l'antimoine. Une telle association dans la composition de l'invention génère un verre présentant une capacité à solariser assez importante et généralement non désirée.

Selon le mode de réalisation de l'invention, la composition comprend une teneur en $Fe^{2+}$ (exprimée sous forme de FeO) inférieure à 10 ppm, ou encore mieux inférieure à 7 ppm. Ces gammes de teneurs permettent d'obtenir des propriétés très satisfaisantes et en particulier, en termes de transmission des IR. De manière toute préférée, la composition comprend une teneur en $Fe^{2+}$ (exprimée sous forme de FeO) inférieure à 5 ppm, ou encore mieux inférieure à 2,5 ppm.

Selon l'invention, la feuille de verre possède une haute transmission des rayonnements IR. Plus précisément, la feuille de verre de la présente invention possède une haute transmission des rayonnements dans le proche infrarouge.

Pour quantifier la bonne transmission du verre dans le domaine des infrarouges, dans la présente description, on utilisera les coefficients d'absorption aux longueurs d'onde de 1050, 950 et 850 nm, qui doivent dès lors être aussi faibles que possible afin d'obtenir une bonne transmission. Le coefficient d'absorption est défini par le rapport entre l'absorbance et la longueur du chemin optique parcouru par un rayonnement électromagnétique dans un milieu donné. Il s'exprime en $m^{-1}$. Il est donc indépendant de l'épaisseur du matériau mais il est fonction de la longueur d'onde du rayonnement absorbé et de la nature chimique du matériau.

Dans le cas du verre, le coefficient d'absorption ($\mu$) à une longueur d'onde $\lambda$ choisie peut être calculé à partir d'une mesure en transmission (T) ainsi que de l'indice de réfraction n du matériau (*thick* = épaisseur), les valeurs de n, $\rho$ et T étant fonction de la longueur d'onde $\lambda$ choisie :

$$\mu = -\frac{1}{thick}.ln\left[\frac{-(1-\rho)^2 + \sqrt{(1-\rho)^4 + 4.T^2.\rho^2}}{2.T.\rho^2}\right]$$

avec

$$\rho = (n-1)^2/(n+1)^2$$

Avantageusement, la feuille de verre selon l'invention a un coefficient d'absorption à la longueur d'onde de 1050 nm inférieur à 5 $m^{-1}$. De préférence, la feuille de verre selon l'invention a un coefficient d'absorption à la longueur d'onde de 1050 nm inférieur ou égal à 2 $m^{-1}$ ou encore mieux, inférieur ou égal à 1,5 $m^{-1}$. De manière toute préférée, la feuille de verre selon l'invention a un coefficient d'absorption à la longueur d'onde de 1050 nm inférieur ou égal à 1 $m^{-1}$.

Avantageusement également, la feuille de verre selon l'invention a un coefficient d'absorption à la longueur d'onde 950 nm inférieur à 5 $m^{-1}$. De préférence, la feuille de verre selon l'invention a un coefficient d'absorption à la longueur d'onde de 950 nm inférieur ou égal à 2 $m^{-1}$ ou encore mieux, inférieur ou égal à 1,5 $m^{-1}$. De manière toute préférée, la feuille de verre selon l'invention a un coefficient d'absorption à la longueur d'onde de 950 nm inférieur ou égal à 1 $m^{-1}$.

Avantageusement également, la feuille de verre selon l'invention a un coefficient d'absorption à la longueur d'onde de 850 nm inférieur à 5 $m^{-1}$. De préférence, la feuille de verre selon l'invention a un coefficient d'absorption à la longueur d'onde de 850 nm inférieur ou égal à 2 $m^{-1}$ ou encore mieux, inférieur ou égal à 1,5 $m^{-1}$. De manière toute préférée, la feuille de verre selon l'invention a un coefficient d'absorption à la longueur d'onde de 850 nm inférieur ou égal à 1 $m^{-1}$.

Selon un mode de réalisation de l'invention, la composition de la feuille de verre peut comprendre, en plus des impuretés contenues notamment dans les matières premières, une faible proportion d'additifs (tels que des agents aidant la fusion ou l'affinage du verre) ou d'éléments provenant de la dissolution des réfractaires constituant les fours de fusion.

Selon un mode de réalisation avantageux de l'invention, la composition de la feuille de verre peut comprendre en outre un ou plusieurs autre(s) colorant(s), en quantité adaptée en fonction de l'effet recherché. Ce(ces) colorant(s) peu(ven)t servir, par exemple, à « neutraliser » une légère couleur obtenue et rendre ainsi la coloration du verre de l'invention plus neutre. Alternativement, ce(ces) colorants peu(ven)t servir à obtenir une couleur recherchée.

Selon un autre mode de réalisation avantageux de l'invention, combinable au mode de réalisation précédent, la feuille de verre peut être revêtue d'une couche ou d'un film qui permet de modifier ou neutraliser la légère couleur pouvant être obtenue (par exemple, un film de PVB coloré).

La feuille de verre selon l'invention peut avantageusement être trempée chimiquement ou thermiquement.

Selon un mode de réalisation de l'invention, la feuille de verre est revêtue d'au moins une couche mince transparente et conductrice de l'électricité. Une couche mince transparente et conductrice selon l'invention peut, par exemple, être une couche à base de $SnO_2{:}F$, de $SnO_2{:}Sb$ ou d'ITO (oxyde d'indium et d'étain), $ZnO{:}Al$ ou encore $ZnO{:}Ga$.

Selon un autre mode de réalisation avantageux de l'invention, la feuille de verre est revêtue d'au moins une couche antiréfléchissante (ou anti-reflet). Ce mode de réalisation est évidemment avantageux dans le cas d'une utilisation de la feuille de verre de l'invention comme face avant d'un écran. Une couche antiréfléchissante selon l'invention peut, par exemple, être une couche à base de silice poreuse à bas indice de réfraction ou elle peut être constituée de plusieurs strates (empilement), notamment un empilement de couches de matériau diélectrique alternant des couches à bas et hauts indices de réfraction et se terminant par une couche à bas indice de réfraction.

Selon un autre mode de réalisation, la feuille de verre est revêtue d'au moins une couche anti-empreinte de manière à réduire/empêcher les empreintes de se marquer. Ce mode de réalisation est également avantageux dans le cas d'une utilisation de la feuille de verre de l'invention comme face avant d'un écran tactile. Une telle couche peut être combinée à une couche mince transparente et conductrice de l'électricité, déposée sur la face opposée. Une telle couche peut être combinée à une couche antiréfléchissante déposée sur la même face, la couche anti-empreinte étant à l'extérieur de l'empilement et recouvrant donc la couche antiréfléchissante.

La feuille de verre selon l'invention peut également être traitée sur au moins une de ses faces principales, par exemple par un matage acide ou basique, de manière à générer par exemple des propriétés antiempreintes ou encore des propriétés antireflets ou anti-scintillements. Ceci est également avantageux notamment dans le cas d'une utilisation de la feuille de verre de l'invention comme façade avant d'un écran, tactile ou non.

En fonction des applications et/ou des propriétés désirées, d'autres couches/d'autres traitements peuvent être déposées/effectués sur l'une et/ou l'autre face de la feuille de verre selon l'invention.

Tous les modes de réalisation de la feuille de verre selon l'invention, sauf mention explicite du contraire, sont bien entendu combinables entre eux sans qu'il soit nécessaire de décrire davantage chacune des combinaisons de modes de réalisation possibles.

En outre, l'invention concerne également un écran ou un panneau ou une tablette tactile, comprenant au moins une feuille de verre selon l'invention, définissant une surface tactile. Selon ce mode de réalisation, l'écran ou le panneau ou la tablette tactile utilise avantageusement la technologie optique FTIR ou PSD. En particulier, pour un écran, la feuille de verre est avantageusement montée au-dessus d'une surface d'affichage. Tous les modes de réalisation décrits plus haut en référence à la feuille de verre de l'invention s'appliquent donc également à l'écran ou le panneau ou la tablette tactile selon l'invention.

Finalement, l'invention concerne également l'utilisation d'une feuille de verre selon l'invention, dans un dispositif utilisant un rayonnement infrarouge se propageant essentiellement à l'intérieur de ladite feuille. Tous les modes de réalisation décrits plus haut en référence à la feuille de verre de l'invention s'appliquent donc également à l'utilisation selon l'invention.

Par rayonnement se propageant essentiellement à l'intérieur de la feuille, on entend un rayonnement qui voyage dans la masse de la feuille de verre entre les deux faces principales de la feuille.

Avantageusement, selon un mode de réalisation de l'utilisation selon l'invention, la propagation du rayonnement infrarouge se fait par réflexion totale interne. Selon ce mode de réalisation, le rayonnement infrarouge peut être injecté à l'intérieur de la feuille de verre à partir d'un ou plusieurs bord(s) de ladite feuille. Par bord de la feuille, on entend chacune des quatre surfaces définies par l'épaisseur de la feuille et sensiblement perpendiculaires aux deux faces principales de la feuille. Toujours selon ce mode de réalisation, le rayonnement infrarouge peut être injecté à l'intérieur de la feuille de verre à partir d'une ou les deux face(s) principale(s) avec un certain angle.

Les exemples qui suivent illustrent l'invention, sans intention de limiter de quelque façon sa couverture.

Exemples

Les matières premières ont été mélangées sous forme de poudre et placées en creuset pour la fusion, selon la composition de base précisée dans le tableau ci-dessous.

| Composition de base | Teneur [% en poids] |
|---|---|
| CaO | 9 |
| $K_2O$ | 0,3 |
| $Na_2O$ | 14 |
| $SO_3$ | 0,3 |
| $Al_2O_3$ | 0,8 |
| MgO | 4,2 |
| $SiO_2$ | complément à 100% |

Différents échantillons ont été préparés avec des quantités variables de fer et aussi d'au moins deux composants parmi le chrome, le sélénium, le cuivre, le cérium, le manganèse et l'antimoine, la composition de base étant maintenue fixe (la teneur en silice étant adaptée dans chaque cas afin d'atteindre les 100% au total, tenant compte du fer et des composants additionnels parmi le chrome, le sélénium, le cuivre, le cérium, le manganèse et l'antimoine). L'échantillon 1 (référence/comparatif) correspond à un verre de l'état de la technique (dit « extra-clair »), à basse teneur en fer et sans chrome, sélénium, cuivre, cérium, manganèse ni antimoine ajouté. Les échantillons 4-19 correspondent à des compositions de feuille de verre selon l'invention.

Les propriétés optiques de chaque échantillon de verre sous forme de feuille ont été déterminées et en particulier, les coefficients d'absorption ($\mu$) aux longueurs d'onde de 850, 950 et 1050 nm ont été déterminés via une mesure en transmission sur un spectrophotomètre Perkin Elmer lambda 950 équipé d'une sphère d'intégration de 150 mm de diamètre, l'échantillon étant placé au port d'entrée de la sphère pour la mesure.

Les tableaux ci-dessous présentent la variation ($\Delta$) du coefficient d'absorption aux longueurs d'onde de 1050, 950 et 850 nm obtenue pour les échantillons selon l'invention, en relatif par rapport à la valeur pour l'échantillon 1 de référence. Les tableaux renseignent également les valeurs calculées des « formules A et B » selon l'invention.

Les résultats montrent que l'ajout d'au moins deux composants parmi le chrome, le sélénium, le cuivre, le cérium, le manganèse et l'antimoine, dans des gammes de teneurs selon l'invention, permet de diminuer très significativement au moins un des coefficients d'absorption aux longueurs d'onde de 850, 950 et 1050 nm, et donc de manière générale, de diminuer l'absorption des rayonnements infrarouges proches.

| Echantillon* | 1 (ref) | 2 | 3 | 4 | 5 | 6 | 7 | 8 | 9 |
|---|---|---|---|---|---|---|---|---|---|
| $Fe_2O_3$ tot (%) | 0,010 | 0,011 | 0,0105 | 0,0094 | 0,0095 | 0,0103 | 0,0103 | 0,0102 | 0,0103 |
| $Cr_2O_3$ (%) | -** | 0,0014 | - | 0,0027 | 0,0022 | - | - | 0,0014 | - |
| Se (%) | - | 0,0051 | - | - | - | - | - | - | - |
| CuO (%) | - | - | 0,0086 | - | - | - | - | 0,0054 | 0,0058 |
| $CeO_2$ (%) | - | - | - | 0,01 | 0,0042 | 0,0252 | - | - | 0,0247 |
| MnO (%) | - | - | - | - | - | 0,0715 | 0,0715 | - | - |
| $Sb_2O_3$ (%) | - | - | 0,1378 | - | - | - | 0,156 | - | - |
| **Formule A** | 0 | 3,1 | 3,7 | 3,6 | 2,6 | 3,3 | 3,3 | 2,8 | 3,2 |
| **Formule B** | 0 | 1,2 | 1,3 | 0,6 | 0,5 | 0,17 | 0,93 | 0,71 | 0,47 |
| $\Delta$ **coefficient d'absorption à 850nm** | | -77% | -38% | -95% | -90% | -78% | -60% | +5% | +52% |
| $\Delta$ **coefficient d'absorption à 950nm** | | -87% | -53% | -96% | -94% | -84% | -56% | -27% | -2% |

(suite)

| Echantillon* | 1 (ref) | 2 | 3 | 4 | 5 | 6 | 7 | 8 | 9 |
|---|---|---|---|---|---|---|---|---|---|
| Δ coefficient d'absorption à 1050nm | | -86% | -54% | -96% | -95% | -91% | -56% | -48% | -33% |

\* les pourcentages sont des pourcentage en poids
\** « - » indique l'absence d'addition dans la composition du verre

| Δ coefficient d'absorption à 1050nm | | | | | | | | | |
|---|---|---|---|---|---|---|---|---|---|

| Echantillon* | 10 | 11 | 12 | 13 | 14 | 15 | 16 | 17 | 18 | 19 |
|---|---|---|---|---|---|---|---|---|---|---|
| $Fe_2O_3$ tot (%) | 0,0099 | 0,0103 | 0,0116 | 0,0110 | 0,0102 | 0,0102 | 0,0102 | 0,0102 | 0,0102 | 0,0104 |
| $Cr_2O_3$ (%) | 0,0013 | - | - | - | - | - | - | - | - | - |
| Se (%) | - | - | 0,0015 | 0,0037 | 0,0054 | 0,0065 | 0,0086 | 0,0026 | 0,0055 | 0,0017 |
| CuO (%) | - | - | - | 0,0058 | - | - | 0,0023 | - | - | - |
| $CeO_2$ (%) | - | 0,0231 | - | - | 0,0148 | - | 0,0055 | 0,0196 | - | - |
| MnO (%) | - | - | 0,0675 | - | - | - | 0,0197 | 0,0404 | 0,0634 | 0,0105 |
| $Sb_2O_3$ (%) | 0,153 | 0,148 | - | - | - | 0,121 | 0,044 | - | - | 0,025 |
| **Formule A** | 3,0 | 3,1 | 1,9 | 2,8 | 3,1 | 3,9 | 5,3 | 3,3 | 3,6 | 1,1 |
| **Formule B** | 1,03 | 0,72 | 0,21 | 0,61 | 0,27 | 0,91 | 0,87 | 0,23 | 0,43 | 0,23 |
| **Δ coefficient d'absorption à 850nm** | -60% | -56% | -78% | -13% | -42% | -46% | -53% | -85% | -64% | -42% |
| **Δ coefficient d'absorption à 950nm** | -55% | -63% | -68% | -38% | -61% | -58% | -62% | -84% | -76% | -50% |
| **Δ coefficient d'absorption à 1050nm** | -57% | -66% | -71% | -48% | -67% | -63% | -69% | -88% | -83% | -53% |
| * les pourcentages sont des pourcentage en poids<br>** « - » indique l'absence d'addition dans la composition du verre | | | | | | | | | | |

**Revendications**

1. Feuille de verre ayant une composition qui comprend, en une teneur exprimée en pourcentages en poids total de verre :

|  |  |
|---|---|
| $SiO_2$ | 55 - 85% |
| $Al_2O_3$ | 0 - 30% |
| $B_2O_3$ | 0 - 20% |
| $Na_2O$ | 0 - 25% |
| CaO | 0 - 20% |
| MgO | 0 - 15% |
| $K_2O$ | 0 - 20% |
| BaO | 0 - 20% |
| Fer total, exprimé sous forme de $Fe_2O_3$, | 0,002 - 0,02% ; |

ladite composition comprenant en outre au moins deux composants parmi le chrome, le sélénium, le cuivre, le cérium, le manganèse et l'antimoine; le chrome, exprimé sous forme de $Cr_2O_3$, étant en une teneur maximale de 0,02% en poids; le sélénium, exprimé sous forme de Se, étant en une teneur maximale de 0,08% en poids; le cuivre, exprimé sous forme de CuO, étant en une teneur maximale de 0,04% en poids; le cérium , exprimé sous forme de $CeO_2$, étant en une teneur maximale de 0,8% en poids; le manganèse, exprimé sous forme de MnO, étant en une teneur maximale de 1,6% en poids; l'antimoine, exprimé sous forme de $Sb_2O_3$, étant en une teneur maximale de 0,8% en poids ;
**caractérisée en ce que** la composition est suivant la formule :

$$[ 10,02*(Cr_2O_3/Fe_2O_3) + 4*(Se/Fe_2O_3) + 2,73*(CuO/Fe_2O_3)$$
$$+ 0,7*(CeO_2/Fe_2O_3) + 0,23*(MnO/Fe_2O_3) + 0,11*(Sb_2O_3/Fe_2O_3) ] \geq A ;$$

A étant égal à 0,30,
**en ce que** la composition est suivant la formule :

$$[2*(Cr_2O_3/Fe_2O_3) + 0,5*(Se/Fe_2O_3) + 0,83*(CuO/Fe_2O_3)$$
$$+ 0,05*(CeO_2/Fe_2O_3) + 0,025*(MnO/Fe_2O_3) + 0,05*(Sb_2O_3/Fe_2O_3)] \leq B;$$

B étant égal à 1,
et **en ce qu'**elle comprend une teneur en $Fe^{2+}$, exprimé sous forme de FeO, inférieure à 10 ppm

2. Feuille de verre selon la revendication précédente, **caractérisée en ce que** A est égal à 0,6.

3. Feuille de verre selon la revendication précédente, **caractérisée en ce que** A est égal à 0,9.

4. Feuille de verre selon l'une des revendications précédentes, **caractérisée en ce que** la composition comprend ;

   - un rapport $Cr_2O_3/Fe_2O_3 \leq 0,5$ ;
   - un rapport $Se/Fe_2O_3 \leq 2$ ;
   - un rapport $CuO/Fe_2O_3 \leq 1,2$ ;
   - un rapport $CeO_2/Fe_2O_3 \leq 20$ :
   - un rapport $MnO /Fe_2O_3 \leq 40$ ; et
   - un rapport $Sb_2O_3/Fe_2O_3 \leq 20$.

5. Feuille de verre selon la revendication précédente, **caractérisée en ce que** la composition comprend :

   - un rapport $Cr_2O_3/Fe_2O_3 \leq 0,25$ ;
   - un rapport $Se/Fe_2O_3 \leq 1$ ;
   - un rapport $CuO/Fe_2O_3 \leq 0,6$ ;

- un rapport $CeO_2/Fe_2O_3 \leq 10$ ;
- un rapport $MnO/Fe_2O_3 \leq 20$ ; et
- un rapport $Sb_2O_3/Fe_2O_3 \leq 10$.

6. Feuille de verre selon l'une des revendications précédentes, **caractérisée en ce que** la composition comprend une teneur en fer total, exprimé sous forme de $Fe_2O_3$, de 0,002 à inférieur à 0,014% en poids par rapport au poids total du verre.

7. Feuille de verre selon l'une des revendications précédentes, **caractérisée en ce qu'**elle a un coefficient d'absorption à la longueur d'onde de 1050 nm inférieur à 5 m$^{-1}$.

8. Feuille de verre selon l'une des revendications précédentes, **caractérisée en ce qu'**elle a un coefficient d'absorption à la longueur d'onde de 850 nm inférieur à 5 m$^{-1}$.

9. Ecran ou panneau ou tablette tactile, comprenant au moins une feuille de verre selon l'une des revendications 1 à 8 définissant une surface tactile.

10. Ecran ou panneau ou tablette tactile selon la revendication précédente, utilisant la technologie optique FTIR ou PSD.

11. Utilisation d'une feuille de verre selon l'une des revendications 1 à 8, dans un dispositif utilisant un rayonnement infrarouge se propageant essentiellement à l'intérieur de ladite feuille.

12. Utilisation selon la revendication précédente, **caractérisée en ce que** la propagation du rayonnement infrarouge se fait par réflexion totale interne.

**Patentansprüche**

1. Glasscheibe mit einer Zusammensetzung, die in einem in Prozent vom Glasgesamtgewicht ausgedrückten Gehalt umfasst:

| | |
|---|---|
| $SiO_2$ | 55-85 % |
| $Al_2O_3$ | 0-30 % |
| $B_2O_3$ | 0-20 % |
| $Na_2O$ | 0-25 % |
| CaO | 0-20 % |
| MgO | 0-15 % |
| $K_2O$ | 0-20 % |
| BaO | 0-20 % |
| Gesamteisen (ausgedrückt in Form von $Fe_2O_3$) | 0,002-0,02 %; |

wobei die Zusammensetzung ferner mindestens zwei Bestandteile unter Chrom, Selen, Kupfer, Cer, Mangan und Antimon umfasst; wobei Chrom (ausgedrückt in Form von $Cr_2O_3$) mit einem maximalen Gehalt von 0,02 Gew.-% vorkommt; wobei Selen (ausgedrückt in Form von Se) mit einem maximalen Gehalt von 0,08 Gew.-% vorkommt; wobei Kupfer (ausgedrückt in Form von CuO) mit einem maximalen Gehalt von 0,04 Gew.-% vorkommt; wobei Cer (ausgedrückt in Form von $CeO_2$) mit einem maximalen Gehalt von 0,8 Gew.-ö vorkommt; wobei Mangan (ausgedrückt in Form von MnO) mit einem maximalen Gehalt von 1,6 Gew.-% vorkommt; wobei Antimon (ausgedrückt in Form von $Sb_2O_3$) mit einem maximalen Gehalt von 0,8 Gew.-% vorkommt; **dadurch gekennzeichnet, dass** die Zusammensetzung die folgende Formel hat:

$$[10,02*(Cr_2O_3/Fe_2O_3) + 4*(Se/Fe_2O_3) + 2,73*(CuO/Fe_2O_3) + 0,7*(CeO_2/Fe_2O_3) + 0,23*(MnO/Fe_2O_3) + 0,11*(Sb_2O_3/Fe_2O_3)] \geq A;$$

wobei A gleich 0,30 ist,
dadurch, dass die Zusammensetzung die folgende Formel hat:

$$[2*(Cr_2O_3/Fe_2O_3) + 0,5*(Se/Fe_2O_3) + 0,83*(CuO/Fe_2O_3) + 0,05*(CeO_2/Fe_2O_3) + 0,025*(MnO/Fe_2O_3) + 0,05*(Sb_2O_3/Fe_2O_3)] \leq B;$$

wobei B gleich 1 ist,
und dadurch, dass sie einen Gehalt an $Fe^{2+}$, ausgedrückt in Form von FeO, von weniger als 10 ppm hat.

**2.** Glasscheibe nach dem vorhergehenden Anspruch, **dadurch gekennzeichnet, dass** A gleich 0,6 ist.

**3.** Glasscheibe nach dem vorhergehenden Anspruch, **dadurch gekennzeichnet, dass** A gleich 0,9 ist.

**4.** Glasscheibe nach einem der vorhergehenden Ansprüche, **dadurch gekennzeichnet, dass** die Zusammensetzung umfasst:

- ein Verhältnis $Cr_2O_3/Fe_2O_3 \leq 0,5$;
- ein Verhältnis $Se/Fe_2O_3 \leq 2$;
- ein Verhältnis $CuO/Fe_2O_3 \leq 1,2$;
- ein Verhältnis $CeO_2/Fe_2O_3 \leq 20$;
- ein Verhältnis $MnO/Fe_2O_3 \leq 40$; und
- ein Verhältnis $Sb_2O_3/Fe_2O_3 \leq 20$.

**5.** Glasscheibe nach dem vorhergehenden Anspruch, **dadurch gekennzeichnet, dass** die Zusammensetzung umfasst:

- ein Verhältnis $Cr_2O_3/Fe_2O_3 \leq 0,25$;
- ein Verhältnis $Se/Fe_2O_3 \leq 1$;
- ein Verhältnis $CuO/Fe_2O_3 \leq 0,6$;
- ein Verhältnis $CeO_2/Fe_2O_3 \leq 10$;
- ein Verhältnis $MnO/Fe_2O_3 \leq 20$; und
- ein Verhältnis $Sb_2O_3/Fe_2O_3 \leq 10$.

**6.** Glasscheibe nach einem der vorhergehenden Ansprüche, **dadurch gekennzeichnet, dass** die Zusammensetzung einen Gesamteisengehalt, ausgedrückt in Form von $Fe_2O_3$, von 0,002 bis weniger als 0,014 Gew.-% bezogen auf das Gesamtgewicht des Glases umfasst.

**7.** Glasscheibe nach einem der vorhergehenden Ansprüche, **dadurch gekennzeichnet, dass** sie einen Absorptionskoeffizienten bei der Wellenlänge von 1050 nm von weniger als 5 $m^{-1}$ hat.

**8.** Glasscheibe nach einem der vorhergehenden Ansprüche, **dadurch gekennzeichnet, dass** sie einen Absorptionskoeffizienten bei der Wellenlänge von 850 nm von weniger als 5 $m^{-1}$ hat.

**9.** Berührungsempfindlicher Bildschirm, berührungsempfindliches Panel oder berührungsempfindliches Tablet nach einem der Ansprüche 1 bis 8, eine berührungsempfindliche Oberfläche definierend.

**10.** Berührungsempfindlicher Bildschirm, berührungsempfindliches Panel oder berührungsempfindliches Tablet nach dem vorhergehenden Anspruch, die optische Technologie FTIR oder PSD verwendend.

**11.** Verwendung einer Glasscheibe nach einem der Ansprüche 1 bis 8 in einer Vorrichtung, die eine Infrarotstrahlung verwendet, die sich im Wesentlichen im Inneren der Scheibe ausbreitet.

**12.** Verwendung nach dem vorhergehenden Anspruch, **dadurch gekennzeichnet, dass** die Ausbreitung der Infrarotstrahlung durch innere Totalreflexion erfolgt.

**Claims**

1. Glass sheet having a composition that comprises, in an amount expressed in percentages by total weight of glass:

| | |
|---|---|
| $SiO_2$ | 55 - 85% |
| $Al_2O_3$ | 0 - 30% |
| $B_2O_3$ | 0 - 20% |
| $Na_2O$ | 0 - 25% |
| CaO | 0 - 20% |
| MgO | 0 - 15% |
| $K_2O$ | 0 - 20% |
| BaO | 0 - 20% |
| Total iron, expressed in $Fe_2O_3$ form | 0.002 - 0.02%; |

said composition furthermore comprising at least two components from chromium, selenium, copper, cerium, manganese and antimony; the chromium, expressed in $Cr_2O_3$ form, being in a maximum content of 0.02% by weight; the selenium, expressed in Se form, being in a maximum content of 0.08% by weight; the copper, expressed in CuO form, being in a maximum content of 0.04% by weight; the cerium, expressed in $CeO_2$ form, being in a maximum content of 0.8% by weight; the manganese, expressed in MnO form, being in a maximum content of 1.6% by weight; the antimony, expressed in $Sb_2O_3$ form, being in a maximum content of 0.8% by weight; **characterized in that** the composition is according to the formula:

$$[10.02*(Cr_2O_3/Fe_2O_3)+4*(Se/Fe_2O_3)+2.73*(CuO/Fe_2O_3)$$
$$+0.7*(CeO_2/Fe_2O_3)+0.23*(MnO/Fe_2O_3)+0.11*(Sb_2O_3/Fe_2O_3)] \geq \textbf{A};$$

**A** being equal to 0.30,
**in that** the composition is according to the formula:

$$[2*(Cr_2O_3/Fe_2O_3)+0.5*(Se/Fe_2O_3)+0.83*(CuO/Fe_2O_3)$$
$$+0.05*(CeO_2/Fe_2O_3)+0.025*(MnO/Fe_2O_3)+0.05*(Sb_2O_3/Fe_2O_3)] \leq$$
$$\textbf{B};$$

**B** being equal to 1,
and **in that** it comprises an $Fe^{2+}$ content, expressed in FeO form, lower than 10 ppm.

2. Glass sheet according to the preceding claim, **characterized in that A** is equal to 0.6.

3. Glass sheet according to the preceding claim, **characterized in that A** is equal to 0.9.

4. Glass sheet according to one of the preceding claims, **characterized in that** the composition has:

   - a $Cr_2O_3/Fe_2O_3$ ratio $\leq 0.5$;
   - an $Se/Fe_2O_3$ ratio $\leq 2$;
   - a $CuO/Fe_2O_3$ ratio $\leq 1.2$;
   - a $CeO_2/Fe_2O_3$ ratio $\leq 20$;
   - an $MnO/Fe_2O_3$ ratio $\leq 40$; and
   - an $Sb_2O_3/Fe_2O_3$ ratio $\leq 20$.

5. Glass sheet according to the preceding claim, **characterized in that** the composition has:

   - a $Cr_2O_3/Fe_2O_3$ ratio $\leq 0.25$;
   - an $Se/Fe_2O_3$ ratio $\leq 1$;
   - a $CuO/Fe_2O_3$ ratio $\leq 0.6$;

- a $CeO_2/Fe_2O_3$ ratio $\leq 10$;
- an $MnO/Fe_2O_3$ ratio $\leq 20$; and
- an $Sb_2O_3/Fe_2O_3$ ratio $\leq 10$.

6. Glass sheet according to one of the preceding claims, **characterized in that** the composition comprises a total iron content, expressed in $Fe_3O_3$ form, from 0.002 to lower than 0.014% by weight relative to the total weight of the glass.

7. Glass sheet according to one of the preceding claims, **characterized in that** it has an absorption coefficient at the wavelength of 1050 nm lower than 5 $m^{-1}$.

8. Glass sheet according to one of the preceding claims, **characterized in that** it has an absorption coefficient at the wavelength of 850 nm lower than 5 $m^{-1}$.

9. Touch screen or touch panel or touch pad, comprising at least one glass sheet according to one of Claims 1 to 8, defining a touch surface.

10. Touch screen or touch panel or touch pad according to the preceding claim, using FTIR or PSD optical technology.

11. Use of a glass sheet according to one of Claims 1 to 8, in a device employing infrared radiation propagating essentially inside said sheet.

12. Use according to the preceding claim, **characterized in that** the infrared radiation propagates by total internal reflection.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013021300 A1
- WO 2013150053 A
- US 2007161492 A
- US 2007209698 A
- US 2007243993 A
- US 2004157722 A